# EUROPÄISCHE PATENTSCHRIFT

(11) **EP 1 136 935 B1**
(45) Veröffentlichungstag und Bekanntmachung des Hinweises auf die Patenterteilung: **02.11.2006**
(21) Anmeldenummer: 00106642.2
(22) Anmeldetag: 24.03.2000
(51) Int. Cl.: G06K 7/00, G06K 19/07

(54) **Dekodiervorrichtung**
Decoding device
Décodeur

(43) Veröffentlichungstag der Anmeldung: 26.09.2001
(73) Patentinhaber: Infineon Technologies AG, 81669 München (DE)
(72) Erfinder: Preis, Viktor, 82024 Taufkirchen (DE); Häring, Martin, 94315 Straubing (DE); Schneckenburger, Christian, 85635 Höhenkirchen (DE)
(74) Vertreter: Epping - Hermann - Fischer

(56) Entgegenhaltungen:
- EP-A- 0 600 556
- EP-A- 0 892 358

## Beschreibung

Die Erfindung betrifft eine Dekodiervorrichtung zur Dekodierung eines übertragenen Signales insbesondere in Chipkartensystemen.

Dekodiervorrichtungen werden verwendet, wenn ein auf einem Subcarrier übermitteltes Signal in einen Binärcode dekodiert werden soll. Dabei treten Probleme dahingehend auf, daß das empfangene Signal in der Regel deutlich vom idealen Signal abweicht. Abweichungen äußern sich beispielsweise in Störspitzen, Veränderungen der Pulslänge oder Signal-Drifts. Die Ursachen für die Abweichung vom idealen Signalverlauf ist in Chipkartensystemen die Signalqualität der Chipkarten selber und die Qualität des Analogteils. Auch der Abstand der Chipkarte von einem Lesegerät sowie die Empfindlichkeit der Empfangseinrichtungen beeinflussen die Signalform. Für eine fehlerlose Dekodierung müssen diese Störungen herausgefiltert werden.

Bekannte Dekodiervorrichtungen basieren auf analoger Signalverarbeitung. Mit Hilfe von Tiefpässen und Schmitt-Triggern wird versucht, ein stabiles Signal herauszufiltern. Diese Dekodierungsvorrichtungen sind jedoch relativ aufwendig, wenn eine sichere Dekodierung erreicht werden soll. Trotzdem können nicht alle Fehler des übertragenen Signales erkannt und/oder korrigiert werden. Darüber hinaus sind sie unflexibel, wenn eine Variation der Codierung oder des Übertragungssystems vorgenommen werden soll.

Die EP 0 892 358 zeigt eine Decodiervorrichtung gemäß dem Oberbegriff des Anspruchs 1.

Der vorliegenden Erfindung liegt daher die Aufgabe zugrunde, eine Dekodiervorrichtung zu schaffen, die eine zuverlässige Dekodierung eines Signales ermöglicht und darüber hinaus flexibel in der Anwendung ist.

Diese Aufgabe wird durch eine Dekodiervorrichtung gelöst mit einer Signalaufbereitungsvorrichtung, die aus einem analogen Eingangssignal ein eine digitale Verarbeitung ermöglichendes Zwischensignal erzeugt, einem Datenregister zur Aufnahme eines zeitlichen Abschnittes des Zwischensignales, einem Bit-Dekodierer zur Umwandlung des in dem Datenregister gespeicherten Abschnittes des Zwischensignales in ein mindestens ein Bit umfassendes Ausgangssignal, und einer Vorrichtung zur Mustererkennung, die mit dem Bit-Dekodierer zusammenwirkt.

Ein analoges Signal wird zunächst in der Signalaufbereitungsvorrichtung so weit bearbeitet, daß am Ausgang ein eine digitale Verarbeitung ermöglichendes Zwischensignal zur Verfügung steht. Störspitzen werden erkannt und unterdrückt, wobei dies vorteilhafterweise im Zuge der Aufsynchronisierung erfolgt. Außerdem werden Pulslängen korrigiert und ein Frequenzdrift des Datenstromes erkannt und kompensiert, was eine einer günstigen Ausführung in einer Vorrichtung zum Sampling geschieht. In einer vorteilhaften Ausgestaltung der Erfindung sind Parameter der Signalaufbereitungsvorrichtung änderbar, beispielsweise durch Software einstellbar. Das Zwischensignal wird abschnittsweise in einem Datenregister abgelegt. Der Bit-Dekodierer dekodiert den im Datenregister abgelegten Abschnitt des Zwischensignals in ein oder mehrere Bits. Zur Dekodierung wirkt der Bit-Dekodierer mit einer Vorrichtung zur Mustererkennung zusammen. Dadurch können auch fehlerhaft oder unvollständig übertragene Signalabschnitte erkannt werden. Dies ist ein besonderer Vorteil, weil so der Aufwand bei der Signalaufbereitung und der Gestaltung der Übertragungsstrecke begrenzbar ist.

In einer vorteilhaften Ausgestaltung arbeitet die Vorrichtung zur Mustererkennung regelbasiert. In einer Weiterbildung sind die Regeln softwaregestützt einstellbar.

Weitere Einzelheiten und Ausgestaltungen der Erfindung sind in den Unteransprüchen angegeben.

Die Erfindung wird nachfolgend in einem Ausführungsbeispiel anhand der Zeichnungen näher erläutert. Es zeigt:
- Figur 1A: ein ASK-moduliertes Signal (Eingangssignal),
- Figur 1B: die demodulierte Signalform des Eingangssignals von Figur 1A,
- Figur 2: mögliche Fehler im Verlauf des Signals von Figur 1B,
- Figur 3: eine erfindungsgemäße Dekodiervorrichtung und
- Figur 4: die Signalaufbereitungsvorrichtung der Dekodiervorrichtung von Figur 3 im Detail.

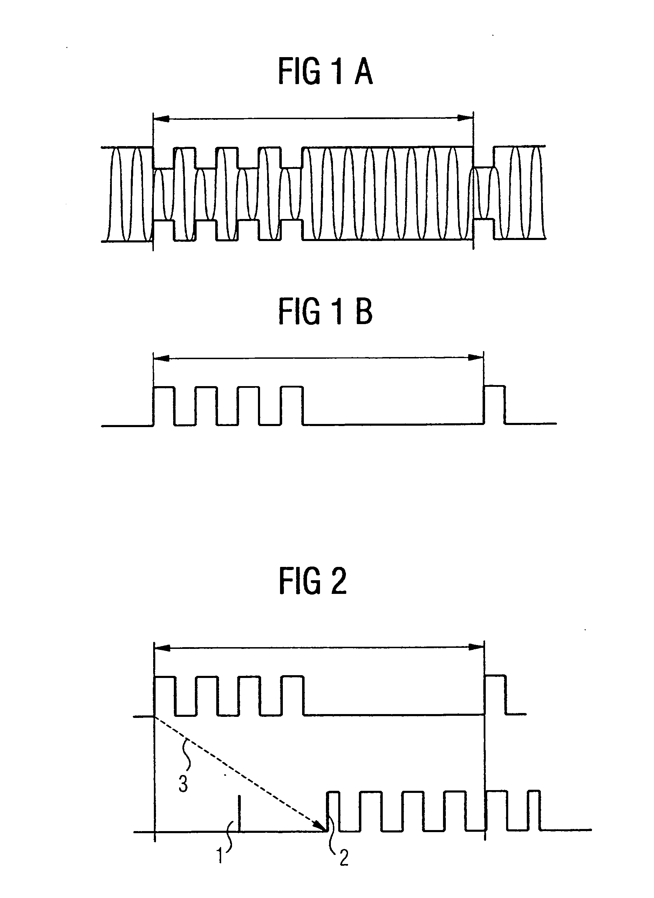

Zur Verdeutlichung der der Erfindung zugrunde liegenden Problematik erläutern die Figuren 1A, 1B und 2 typische Signalverläufe, wie sie beim Einsatz kontaktloser Chipkarten vorkommen. Im sendenden System wird eine Information in eine Datenfolge kodiert, anschließend moduliert und dann gesendet. Ein mögliches digitales Modulationsverfahren ist das sogenannte ASK-Verfahren. Bei diesem Verfahren wird die Amplitude eines Trägers entsprechend der Datenfolge variiert. Der logischen Null ist eine erste Amplitude und der logischen Eins eine zweite Amplitude zugeordnet. Ein solches moduliertes Signal ist in der Figur 1A dargestellt. Nach der Trennung von dem Trägersignal (Demodulierung) steht wieder die digitale Datenfolge gemäß der Figur 1B, die sie in idealer Form zeigt, zur Verfügung. Dieses gewonnene Signal entspricht in der Regel aber nicht der idealen Signalform. Toleranzen beim Sender und beim Empfänger sowie Störungen auf der Übertragungsstrekke verändern die Signalfolge oft so, daß eine Dekodierung der Datenfolge gar nicht oder nur fehlerhaft möglich ist. Der in den Figuren 1A und 1B gekennzeichnete Abschnitt entspricht jeweils einem unkodierten Bit.

In der Figur 2 sind mögliche Fehler des übertragenen Signales dargestellt. Im oberen Teil des Diagrammes ist das ideale Signal von Figur 1B gezeigt. Im unteren Teil des Diagrammes ist dagegen ein reales Signal zu sehen, wie es nach der Demodulierung zur Weiterverarbeitung vorliegt. Das reale Signal weist in diesem Beispiel Verunreinigungen auf durch eine Störspitze 1, eine veränderte Pulsbreite 2, sowie eine Signalverschiebung 3. Somit ist nicht mehr klar erkennbar, wann ein Signalabschnitt beginnt und welche Pulse der Signalfolge zur Dekodierung vorzusehen sind.

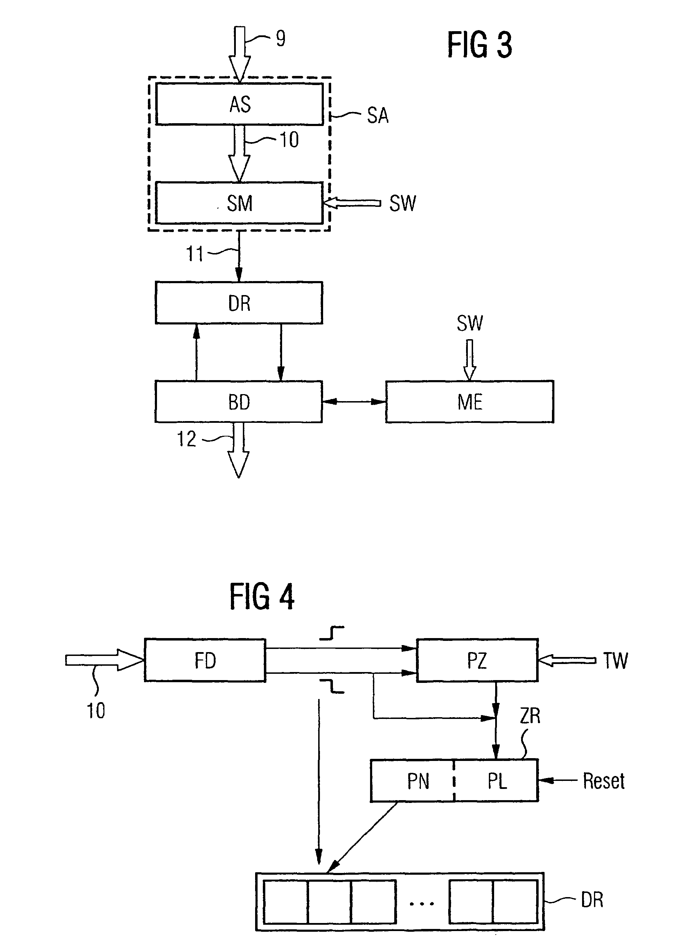

Die Figur 3 stellt ein Ausführungsbeispiel einer erfindungsgemäßen Dekodiervorrichtung dar. Der erste Schritt der Verarbeitung eines analogen Eingangssignales 9 besteht darin, das Eingangssignal 9 in eine zur digitalen Verarbeitung geeignete Form umzuwandeln, was in einer Signalaufbereitungsvorrichtung SA geschieht. In diesem Ausführungsbeispiel ist die Signalaufbereitungsvorrichtung SA in zwei Blöcke unterteilbar. Im ersten Block, einer Vorrichtung zur Aufsynchronisierung AS, wird das analoge Eingangssignal 9 in ein digitales Signal 10 umgewandelt und dabei ein erster Teil der oben beschrieben Fehler behandelt, beispielsweise Störspitzen unterdrückt. Im zweiten Block, einer "intelligenten" Samplingvorrichtung SM, werden nutzbare Impulse des digitalen Signales erkannt und dabei ein zweiter Teil der oben beschriebenen Fehler behandelt. Der Umfang der Daten wird auf ein Minimum reduziert, da für jeden Impuls des digitalen Signales 10 auch nur eine Bit im Zwischensignal 11 weitergegeben wird.

Die anhand der Figur 2 beschriebenen Fehler werden also zumindest teilweise in der Signalaufbereitungsvorrichtung SA erkannt und korrigiert. Für Fälle, in denen das Signal so stark gestört ist, daß eine zuverlässige Erkennung nicht mehr möglich ist, kann eine entsprechende Überwachung vorgesehen werden. Somit ist verhindert, daß irrtümlich eine falsche Information ausgegeben wird. Die Parameter der Signalaufbereitungsvorrichtung SA können eingestellt werden. Die Signalaufbereitungsvorrichtung SA erkennt den Beginn und das Ende eines Abschnittes des Eingangssignales 9, auch wenn eine zeitliche Verschiebungs auftritt (Signal-Shift). Anschließend wird der Abschnitt in Form eines Zwischensignales 11 in einem Datenregister DR abgelegt.

Die Aufgabe eines Bit-Dekodierers BD ist, aus dem in dem Datenregister abgelegten Zwischensignal ein Ausgangssignal 12 zu generieren. Es muß also erkannt werden, welche Information der in dem Datenregister abgelegten Datenfolge entspricht. Dazu arbeitet der Bit-Dekodierer BD mit einer Vorrichtung zur Mustererkennung ME zusammen, deren Parameter wiederum, beispielsweise durch Software, einstellbar sind. Durch die Vorrichtung zur Mustererkennung ME ist der Bit-Dekodierer nicht darauf angewiesen, daß ein Signal hoher Güte zur Auswertung zur Verfügung steht. Auch gestörte Signale mit fehlerhaften Datenfolgen können anhand der Mustererkennung mittels geeigneter Masken oder Algorithmen zuverlässig erkannt werden. Die Vorrichtung zur Musterekennung ME überblickt einen größeren zeiltlichen Bereich. Daher ist die Dekodierung relativ unempfindlich gegenüber einzelnen kleinen Störungen. Das Ausgangssignal 12 kann aus einem Bit bestehen, oder aber aus mehreren Bits, je nachdem welches Kodier- und Modulationsverfahren zur Anwendung kommt.

In einer vorteilhaften Ausgestaltung arbeitet die Vorrichtung zur Mustererkennung ME regelbasiert. Die Regeln zur Erkennung sind wiederum einstellbar. Die mehrfache Einstellbarkeit von Parametern ermöglicht ein flexibles Anpassen der Dekodiervorrichtung an verschiedener Anwendungs- und Kodiermöglichkeiten. Eine Adaption an andere Übertragungsraten- und frequenzen isr problemlos möglich.

Das Datenregister DR dient als Standardschnittstelle zwischen der Signalaufbereitungsvorrichtung SA und dem Bit-Dekodierer BD. Bei einer Veränderung der Signalaufbereitungsvorrichtung SA, beispielsweise um anderen Modulationsarten gerecht zu werden, muß deswegen nicht der Bit-Dekodierer BD verändert werden, da er lediglich auf das Datenregister zugreift. Gleiches gilt ebenso umgekehrt.

Die Figur 4 enthält ein detaillierteres Ausführungsbeispiel der Signalaufbereitungsvorrichtung SA. Angenommen ist wiederum, daß das Eingangssignal 9 einen ASK-moduliertes Signal ist. Dieses Signal 9 liegt nun als digitales Signal 10 an einem Flankendetektor FD an, der eine abfallende oder ansteigende Flanke detektiert und entsprechende Signale an seinen Ausgängen generiert, die wiederum an den Eingängen eines Pulslängenzählers PZ anliegen. Der Pulslängenzähler PZ wertet die Dauer eines Pulses aus und erkennt daran, ob es sich um ein Störsignal oder ein Nutzsignal handelt. Die Toleranzwerte TW, die die Grenze zwischen Nutz- und Störsignal kennzeichnen, können einstellbar vorgegeben werden. Je nachdem, ob das Eingangssignal eine logische Eins oder eine logische Null aufweist, wird als Ausgang des Pulslängenzählers PZ eine Eins oder Null generiert. Zum Zeitpunkt der abfallenden Flanke des digitalen Signales 10 steht fest, ob der Puls die notwendige Mindestlänge hatte, um als Nutzsignal zu gelten. Daher wird bei fallender Flanke das Ausgangssignal des Pullängenzählers PZ ausgewertet und der Wert in einem Zwischenregister ZR gespeichert. Automatisch wird eine Pulsnummer PN vergeben, die den Index für die Position des Pulses innerhalb des Datenregisters DR bildet. Da nur dann, wenn wieder eine abfallende Flanke auftritt, eine gültiges Signal vorgelegen haben kann, wird die Information über das Auftreten einer abfallenden Flanke an das Datenregister DR weitergegeben. Dort bewirkt dies, daß bei Übergabe einer logischen Eins von dem Zwischenregister ZR das Setzen der dafür vorgesehenen Registerstelle im Datenregister DR ermöglicht wird. Ansonsten ist dies verhindert, da sonst eine unendlich andauernde Eins im digitalen Signal 10, was auf einen Fehler zurückzuführen ist, als detektierte Eins ins Datenregister DR eingetragen werden würde.

Bei Beginn eines neuen Abschnittes des digitalen Signales 10 wird die Pulsnummer PN zurückgesetzt. Dadurch kann die erste Registerstelle im Datenregister DR wieder mit einem neuen Wert belegt werden.

Wird statt eines amplitudenmodulierten Signales beispielsweise ein phasenmoduliertes Signal verwendet, ist der Flankendetektor FD durch einen Phasendetektor zu ersetzen. Die Erfindung ist jedoch nicht auf amplituden- oder phasenmodulierte Signale beschränkt, sondern kann auf alle anderen digitalen Modulationsverfahren ausgedehnt werden.

## Patentansprüche

1. Dekodiervorrichtung mit
- einer Signalaufbereitungsvorrichtung (SA), die aus einem analogen Eingangssignal (9) ein eine digitale Verarbeitung ermöglichendes Zwischensignal (11) erzeugt, **gekennzeichnet durch**
- ein Datenregister (DR) zur Aufnahme eines zeitlichen Abschnittes des Zwischensignales (11),
- einen Bit-Dekodierer (BD) zur Umwandlung des in dem Datenregister gespeicherten Abschnittes des Zwischensignales (11) in ein mindestens ein Bit umfassendes Ausgangssignal (12), und
- eine Vorrichtung zur Mustererkennung (ME), die mit dem Bit-Dekodierer (BD) zusammenwirkt.

2. Dekodiervorrichtung nach Anspruch 1,
**dadurch gekennzeichnet, daß** die Signalaufbereitungsvorrichtung (SA) eine Vorrichtung zur Aufsynchronisierung (AS), an deren Ausgang ein digitales Signal (10) vorliegt, und eine Vorrichtung zum Sampling (SM) des digitalen Signales (10) aufweist, an deren Ausgang das Zwischensignal (11) vorliegt.

3. Dekodiervorrichtung nach Anspruch 1,
**dadurch gekennzeichnet, daß**
die Signalaufbereitungsvorrichtung (SA) Mittel zur Fehlererkennung aufweist.

4. Dekodiervorrichtung nach Anspruch 1,
**dadurch gekennzeichnet, daß**
die Signalaufbereitungsvorrichtung (SA) Mittel zur Fehlerkorrektur aufweist.

5. Dekodiervorrichtung nach Anspruch 1,
**dadurch gekennzeichnet, daß**
die Vorrichtung zur Mustererkennung (ME) regelbasiert arbeitet.

6. Dekodiervorrichtung nach einem der Ansprüche 1 bis 5,
**dadurch gekennzeichnet, daß**
Parameter für die Vorrichtung zur Mustererkennung (ME) änderbar sind.

7. Dekodiervorrichtung nach Anspruch 6,
**dadurch gekennzeichnet, daß**
die Parameter durch Software änderbar sind.

8. Dekodiervorrichtung nach einem der Ansprüche 1 bis 7,
**dadurch gekennzeichnet, daß**
sie in einer Chipkarte verwendet wird.

9. Dekodiervorrichtung nach einem der Ansprüche 1 bis 7,
**dadurch gekennzeichnet, daß**
sie in einer Lesevorrichtung für Chipkarten verwendet wird.

## Claims

1. Decoding device having
- a signal-conditioning device (SA) which generates from an analog input signal (9) an intermediate signal (11) enabling digital processing, **characterized by**
- a data register (DR) for accepting a time section of the intermediate signal (11),
- a bit decoder (BD) for converting the section of the intermediate signal (11) stored in the data register into an output signal (12) comprising at least one bit, and
- a pattern recognition device (ME) that works together with the bit decoder (BD).

2. Decoding device according to claim 1,
**characterized in that** the signal-conditioning device (SA) has a device for synchronization (AS), at whose output a digital signal (10) is present, and a device for sampling (SM) the digital signal (10), at whose output the intermediate signal (11) is present.

3. Decoding device according to claim 1, **characterized in that** the signal-conditioning device (SA) has means for fault detection.

4. Decoding device according to claim 1, **characterized in that** the signal-conditioning device (SA) has means for fault correction.

5. Decoding device according to claim 1, **characterized in that** the pattern recognition device (ME) works on a rule basis.

6. Decoding device according to one of claims 1 to 5, **characterized in that** parameters for the pattern recognition device (ME) can be changed.

7. Decoding device according to claim 6, **characterized in that** the parameters can be changed by software.

8. Decoding device according to one of claims 1 to 7, **characterized in that** it is used in a smart card.

9. Decoding device according to one of claims 1 to 7, **characterized in that** it is used in a reading device for smart cards.

## Revendications

1. Installation de décodage comprenant
- un dispositif (SA) de préparation du signal qui produit, à partir d'un signal (9) analogique d'entrée, un signal (11) intermédiaire permettant un traitement numérique, **caractérisée par**
- un registre (DR) de données pour l'enregistrement d'une partie temporelle du signal (11) intermédiaire,
- un décodeur (BD) de bit pour transformer la partie du signal (11) intermédiaire, mémorisée dans le registre de données, en au moins un signal (12) de sortie comprenant un bit, et
- un dispositif de reconnaissance (ME) de modèle, qui coopère avec le décodeur (BD) de bit.

2. Installation de décodage suivant la revendication 1,
**caractérisée en ce que**
le dispositif (SA) de préparation du signal a un dispositif (AS) de synchronisation, à la sortie duquel il y a un signal (10) numérique et un dispositif (SM) d'échantillonnage du signal (10) numérique, à la sortie duquel il y a le signal (11) intermédiaire.

3. Installation de décodage suivant la revendication 1,
**caractérisée en ce que**
le dispositif (SA) de préparation du signal a des moyens de reconnaissance d'une erreur.

4. Installation de décodage suivant la revendication 1,
**caractérisée en ce que**
le dispositif (SA) de préparation du signal a des moyens de correction d'une erreur.

5. Installation de décodage suivant la revendication 1,
**caractérisée en ce que**
le dispositif (ME) de reconnaissance de modèle fonctionne sur la base d'une règle.

6. Installation de décodage suivant l'une des revendications 1 à 5,
**caractérisée en ce que**
des paramètres du dispositif (ME) de reconnaissance de modèle peuvent être modifiés.

7. Installation de décodage suivant la revendication 6,
**caractérisée en ce que**
les paramètres peuvent être modifiés par logiciel.

8. Installation de décodage suivant l'une des revendications 1 à 6,
**caractérisée en ce qu'**elle est utilisée dans une carte à puce.

9. Installation de décodage suivant l'une des revendication 1 à 7,
**caractérisée en ce qu'**elle est utilisée dans une installation de lecture de cartes à puce.
